# EUROPEAN PATENT APPLICATION

(11) **EP 3 162 220 A1**
(43) Date of publication of application: **03.05.2017**
(21) Application number: 15815821.2
(22) Date of filing: 17.04.2015
(51) Int. Cl.: A23K 50/00

(54) **METHOD FOR PRODUCING GRANULAR PET FOOD**

(30) Priority: 30.06.2014 JP 2014135116
(71) Applicant: Unicharm Corporation, Ehime 799-0111 (JP)
(72) Inventor: INOUE Kazunori, Itami-shi Hyogo 664-0831 (JP); MIYAMOTO Katsunori, Itami-shi Hyogo 664-0831 (JP)
(74) Representative: Wendels, Stefan
(86) International application number: PCT/JP2015/061825
(87) International publication number: WO 2016/002307

(57) **Abstract**

Provided is a method for producing granular pet food including: a powder raw ingredient mixing step of mixing powder raw ingredients to obtain mixed powder; a liquid addition step of adding aqueous raw ingredients and oils and fats to the mixed powder; and a granulation step of granulating the raw ingredient mixture that contains the mixed powder, the aqueous raw ingredients, and the oils and fats after the liquid addition step, in which the liquid addition step includes an emulsion preparation step of preparing an emulsion that contains the aqueous raw ingredients, the oils and fats, and an emulsifier in advance, and the emulsion is added to the mixed powder.

## Description

### Technical Field

The present invention relates to a method of producing granular pet food.

Priority is claimed on Japanese Patent Application No. 2014-135116, filed on June 30, 2014, the content of which is incorporated herein by reference.

### Background Art

As a type of pet food, so-called dry type pet food formed of powder with a moisture content of approximately 10% by weight or less and semi-moist pet food with the moisture content greater than that of dry type pet food may be exemplified.

A method of producing granular pet food which includes adding water to powder raw ingredients, kneading the raw ingredients, and granulating the obtained kneaded material is typical as the method of producing granular pet food. The dry type pet food is produced by being granulated and then dried so as to have a desired moisture content.

Further, oils and fats are likely to be blended with pet food mainly targeting dogs or cats.

For example, PTL 1 describes semi-moist type pet food which contains oils and fats and in which the moisture content is increased to be in a range of 13% to 23% by weight, as pet food which is soft and easy to eat. As a method of producing this semi-moist type pet food, PTL 1 describes a method of supplying raw ingredients such as meat, starch, oils and fats, and glycerin to an extruder, adding water thereto while supplying the raw ingredients, continuously mixing and conveying raw ingredients while heating and pressing, and cutting and forming the raw ingredients in a granular shape immediately after the obtained mixture is extruded from the extruder.

### Citation List

### Patent Literature

[PTL 1] Japanese Unexamined Patent Application, First Publication No. 2006-158265

### Summary of Invention

### Technical Problem

According to the findings of the present inventors, unevenness easily occurs in the composition of each pellet of the obtained granular pet food and uniformity thereof becomes easily insufficient when the method of adding and mixing oils and fats and water described in PTL 1 is used.

The reason for this is considered that oils and fats and water are unlikely to be mixed together and oils and fats and water are unlikely to be uniformly dispersed in a mixture of raw ingredients.

The present invention has been made in consideration of the above-described circumstances, and an object thereof is to provide a method of producing granular pet food which is capable of improving the uniformity in composition of granular pet food.

### Solution to Problem

An aspect of the present invention is as follows.
[1] A method for producing granular pet food including: a powder raw ingredient mixing step of mixing powder raw ingredients to obtain mixed powder; a liquid addition step of adding aqueous raw ingredients and oils and fats to the mixed powder; and a granulation step of granulating the raw ingredient mixture that contains the mixed powder, the aqueous raw ingredients, and the oils and fats after the liquid addition step, in which the liquid addition step includes an emulsion preparation step of preparing an emulsion that contains the aqueous raw ingredients, the oils and fats, and an emulsifier in advance, and the emulsion is added to the mixed powder.
[2] The method of producing granular pet food according to [1], in which the emulsifier is mixed with a part or all of oils and fats and then mixed with the aqueous raw ingredients in the emulsion preparation step.
[3] The method of producing granular pet food according to [2], in which an HLB value of the emulsifier in the emulsion is 8 or less.
[4] The method of producing granular pet food according to any one of [1] to [3], in which the emulsion includes at least two kinds of emulsifiers having HLB values different from each other.
[5] The method of producing granular pet food according to [4], in which the emulsifier in the emulsion includes monoglycerides.
[6] The method of producing granular pet food according to any one of [1] to [5], in which the emulsion preparation step includes a step of adding water, and the hardness of water is 120 mg/L or less.

### Advantageous Effects of Invention

According to an embodiment of the present invention, it is possible to improve the uniformity in composition of granular pet food.

### Description of Embodiments

In the present specification, the term "pet" indicates an animal that has been bred by a person. In a narrower sense, a pet is an animal cared for by the owner. In addition, the "pet food" indicates feed for pets. The pet food of the present embodiment can be sold as the "feed for animals" or "food for animals."

In the present embodiment, the moisture content of granular pet food is not particularly limited, and the granular pet food may be dry type granular pet food or semi-moist type granular pet food.

The moisture content of dry type granular pet food is preferably 12% by mass or less and more preferably 10% by mass or less. The lower limit of the moisture content thereof is not particularly limited. The lower limit thereof is typically 5% by mass or greater and more preferably 7% by mass or greater.

The moisture content of semi-moist type granular pet food is preferably in a range of 15% to 35% by mass and more preferably in a range of 20% to 30% by mass. Further, the water activity (Aw) of the semi-moist type granular pet food is preferably in a range of 0.60 to 0.87 and more preferably in a range of 0.70 to 0.80.

In the present specification, the moisture content is a value obtained by the following measurement method.

An object to be measured is ground using a grinder so as to pass through a sieve having an opening diameter of 1 mm and then used as an analytical sample. 2 g to 5 g of the analytical sample is accurately weighed, put into an aluminum weighing dish (after the sample is dried in advance, the weight thereof is accurately weighed), dried at a temperature of 135 ± 2°C for 2 hours, and left to be cooled in a desiccator. Next, the weight thereof is accurately weighed, and then the moisture content is acquired from a difference between the weights weighed before and after the drying.

In the present specification, the moisture content of the granular pet food is a value obtained by measurement immediately after a pet food product produced by accommodating the granular pet food in a packaging container to be sealed immediately after production is exposed within 30 days from the date of production or is a value obtained by measurement under the conditions similar to the conditions described above.

In the present specification, the value of water activity (Aw) of the granular pet food is a value obtained by measurement performed on a sample prepared by grinding the granular pet food at a measurement temperature of 25°C using a known water activity measuring device.

For example, the measurement can be carried out using a water activity measuring device "Novasina IC-500 AW-LAB (product name, manufactured by DKSH Japan K.K.)".

In the present specification, the water activity (Aw) of the granular pet food is a value obtained by measurement immediately after a pet food product produced by accommodating the granular pet food in a packaging container to be sealed immediately after production is exposed within 30 days from the date of production or is a value obtained by measurement under the conditions similar to the conditions described above.

In the present specification, the hardness of water is a value obtained by converting the total amount of calcium ions and magnesium ions in water into the amount (mg/L) of calcium carbonate (CaCO3). The measurement of calcium ions and magnesium ions is performed using a titration method in conformity with JIS K0101 (industrial water test method).

### <Raw ingredients>

The granular pet food of the present embodiment is produced by performing a granulation step of granulating a raw ingredient mixture. The raw ingredient mixture includes at least powder raw ingredients, aqueous raw ingredients, oils and fats, and an emulsifier.

### [Powder raw ingredients]

Known raw ingredients used in a powder shape during the step of granulating pet food can be suitably used. The powder raw ingredients are used by mixing plural kinds of raw ingredients.

Examples thereof include cereals (such as corn, wheat, rice, barley, oats, and rye), beans (such as whole soybeans), starch (such as wheat starch, corn starch, rice starch, potato starch, tapioca starch, sweet potato starch, and sago starch, vegetable protein (such as corn gluten meal, defatted soybean meal, and soybean protein), meat (such as chicken, beef, pork, venison, meals (such as chicken meal, pork meal, beef meal, and mixed meal of these)), seafood (such as fish and meals (fish meal)), vegetables, and powdery additives (such as vitamins, minerals, an amino acid, flavoring raw ingredients, fibers, colorants, and palatability enhancers).

The meals indicate powder products obtained by compressing and finely grinding meat or seafood.

Examples of the palatability enhancers include animal raw ingredient extract powder of meat and seafood; and vegetable raw ingredient extract powder.

It is preferable that the composition of powder raw ingredients is set according to the target nutritional composition of the granular pet food to be obtained.

### [Aqueous raw ingredients]

The aqueous raw ingredients indicate water-soluble raw ingredients, an aqueous solution of the water-soluble raw ingredients, or added water to be added to a mixture of powder raw ingredients (mixed powder described below) in a state of an aqueous solution. The added water does not indicate a solvent in an aqueous solution but indicates water added to powder raw ingredients in a state of water.

As the raw ingredients added to the powder raw ingredients in a state of an aqueous solution, commercially available raw ingredients in a state of an aqueous solution or water-soluble raw ingredients used in a state of being dissolved in water during the process of producing pet food may be exemplified. Examples thereof include liquid sugar, humectants, and palatability enhancers added in a state of an aqueous solution. The aqueous raw ingredients may be used alone or in combination of two or more kinds thereof.

### (Liquid sugar)

The liquid sugar is an aqueous solution of saccharides, contributes to improving palatability by adjusting the taste of pet food, and also contributes to reducing water activity. Further, liquid sugar has an advantage that scorching is unlikely to occur during a heating process compared to powdery sugar.

Examples of the liquid sugar include sugar containing glucose or fructose as a main component, isomerized liquid sugar containing moisture, and sugar-mixed isomerized liquid sugar formed by adding sugar to isomerized liquid sugar.

The content of moisture in the liquid sugar is preferably in a range of 20% to 50% by mass and more preferably in a range of 20% to 30% by mass.

### (Humectant)

A humectant is a component added for holding moisture in the granular pet food and reducing the water activity. The humectant is frequently used for producing granular pet food in which the moisture content of a product is high such as so-called semi-moist type pet food. It is preferable that the blending amount of the humectant is set according to the water activity of the target granular pet food.

One or more humectants selected from the group consisting of propylene glycol, glycerin, and sugar alcohol are preferably used as the humectant.

The propylene glycol is typically used in a state of an aqueous solution and can be used even if the state is not an aqueous solution. The concentration of propylene glycol in a propylene glycol aqueous solution is not particularly limited. For example, the concentration thereof is preferably in a range of 40% to 100% by mass and more preferably in a range of 40% to 60% by mass.

The glycerin is typically used in a state of an aqueous solution and can be used even if the state is not an aqueous solution. The concentration of glycerin in a glycerin aqueous solution is not particularly limited. For example, the concentration thereof is preferably in a range of 80% to 100% by mass and more preferably in a range of 80% to 85% by mass.

As the sugar alcohol, sorbitol or reduced sugar syrup is preferable. The sugar alcohol may be used in combination of two or more kinds thereof. The sugar alcohol is typically used in a state of an aqueous solution and can be used even if the state is not an aqueous solution.

The concentration of the sugar alcohol in a sugar alcohol aqueous solution is not particularly limited. For example, the concentration thereof is preferably in a range of 50% to 100% by mass and more preferably in a range of 50% to 70% by mass.

### (Palatability enhancer added in state of aqueous solution)

Examples of the palatability enhancers added in a state of an aqueous solution include animal raw ingredient extracts of meat and seafood; vegetable raw ingredient extracts, extracts in a state of an aqueous solution, and water-soluble concentrated extracts.

### (Water)

In water used when an aqueous solution serving as aqueous raw ingredients is prepared or water used as added water, the hardness of water is preferably 120 mg/L or less and more preferably 90 mg/L or less. When water having a hardness of 120 mg/L or less is used, an excellent emulsified state of an emulsion can be easily obtained. The lower limit of the hardness of water may be zero, but is preferably 40 mg/L or greater from the viewpoint of availability or ease of preparation.

### [Oils and fats]

The taste of granular pet food can be adjusted so that the palatability is improved by adding oils and fats thereto. Further, the granular pet food is easily softened as the amount of oils and fats to be added thereto is larger.

The oils and fats may be vegetable oils and fats or animal oils and fats. Known oils and fats can be suitably used in production of pet food. The oils and fats may be used alone or in combination of two or more kinds thereof.

The oils and fats may be in a state of a liquid at room temperature or in a state of a solid at room temperature. The oils and fats in a state of a solid may be heated to be in a state of a liquid as necessary for use.

Examples of the animal oils and fats include chicken oil, lard, beef tallow (fat), and milk fats and oils.

Examples of the vegetable oils and fats include corn oil, palm oil, soybean oil, and rapeseed oil.

Particularly from the viewpoint of easily obtaining high palatability, animal oils and fats are preferable.

### [Emulsifier]

An emulsifier which can be used as a food additive can be used as the emulsifier. Examples thereof include sorbitan fatty acid ester, glycerin fatty acid ester, and sucrose fatty acid ester.

The emulsifier may be used alone or in combination of two or more kinds thereof.

The emulsifier is used when the following emulsion is prepared together with at least aqueous raw ingredients and oils and fats. In addition, the emulsion may contain the emulsifier and the emulsifier may be mixed into powder raw ingredients.

It is preferable that the HLB value of the emulsifier to be added to an emulsion is selected according to the components of the emulsion so as to obtain an intended emulsified state.

From the viewpoint of dispersibility in oils and fats, it is preferable that an emulsifier having an HLB value of 8 or less is used.

From the viewpoint of easily obtaining excellent emulsion stability, it is preferable that a combination of two or more kinds of emulsifiers having different HLB values is used as the emulsifier to be added to an emulsion. For example, it is preferable that a combination of one or more kinds of medium HLB emulsifiers respectively having an HLB value of 4 to 8 and one or more kinds of low HLB emulsifiers respectively having an HLB value of 1 to 4 is used.

Examples of the medium HLB emulsifier include sorbitan fatty acid ester and sucrose fatty acid ester, which has an HLB value of 4 to 8.

Examples of the low HLB emulsifier include reactive monoglycerides (containing 45% by mass or greater of glycerin fatty acid monoester) and lecithin, which has an HLB value of 3 to 4.

From the viewpoint of easily obtaining an anti-aging effect of starch, an emulsifier containing monoglycerides is preferable as an emulsifier to be added to powder raw ingredients. Specifically, reactive monoglycerides (containing 45% by mass or greater of glycerin fatty acid monoester) having an HLB value of 3 to 4 are preferable.

The emulsifier to be added to powder raw ingredients may be the same as or different from the emulsifier in the emulsion.

### <Blending of raw ingredients>

The granular pet food is obtained by granulating the raw ingredient mixture during the granulation process. The raw ingredient mixture may be coated with an external additive after the granulation.

In a case where a product of granular pet food with a low moisture content, such as so-called dry type granular pet food, is produced, the raw ingredients are heated and dried after the granulation as necessary. In a case where the raw ingredients are coated with an external additive, the coating is performed after the drying.

Examples of the external additive include oils and fats (such as animal oils and fats and vegetable oils and fats) and liquid palatability enhancers (such as animal raw ingredient extracts and vegetable raw ingredient extracts).

In the raw ingredient composition using the raw ingredient mixture to be granulated as a reference (100% by mass), the total amount of the powder raw ingredients is preferably 60% by mass or greater and more preferably 70% by mass or greater, from the viewpoint of easily obtaining excellent formability. From the viewpoint of the balance between the powder raw ingredients and other components, the upper limit of the powder raw ingredients is preferably 90% by mass or less and more preferably 80% by mass or less.

Regardless of the moisture content of the granular pet food, the total amount of the aqueous raw ingredients (including a humectant and water) is preferably in a range of 10% to 40% by mass, more preferably in a range of 20% to 35% by mass, and still more preferably in a range of 20% to 30% by mass based on the amount of the raw ingredient mixture. When the total amount of the aqueous raw ingredients is lower than or equal to the upper limit of the above-described range, the excellent formability can be easily obtained.

The total amount of water in the raw ingredient mixture, that is, the total amount of a solvent and added water in raw ingredients to be added in a state of an aqueous solution is preferably in a range of 0% to 20% by mass and more preferably in a range of 5% to 15% by mass.

Further, particularly in a case of semi-moist type granular pet food, the total amount of water in the raw ingredient mixture is preferably in a range of 8% to 12% by mass from the viewpoint of easily obtaining excellent softness.

The total amount of the humectant (which does not include a solvent) in the raw ingredient mixture is preferably in a range of 0% to 15% by mass and more preferably in a range of 5% to 10% by mass based on the amount of the raw ingredient mixture.

In a case of producing semi-moist type granular pet food, it is preferable that a humectant is used in order to obtain excellent water activity.

The total amount of oils and fats in the raw ingredient mixture is preferably in a range of 0.5% to 10% by mass and more preferably in a range of 1% to 5% by mass based on the amount of the raw ingredient mixture. When the total amount of oils and fats is greater than or equal to the lower limit of the above-described range by providing the emulsion preparation step described below, an effect of improving the uniformity of the granular pet food is sufficiently obtained. When the total amount thereof is lower than or equal to the upper limit of the above-described range, excellent shape retention properties are easily obtained.

The amount of the emulsifier to be added to an emulsion described below is preferably 0.1 % by mass or greater and more preferably 0.3% by mass or greater based on the amount of the emulsion. When the amount of the emulsifier is in the above-described range, an effect of improving the uniformity of granular pet food is sufficiently obtained.

In a case where the emulsifier is also added to powder raw ingredients, the amount of the emulsifier to be added is preferably 0.3% by mass or greater and more preferably 0.5% by mass or greater based on the amount of powder raw ingredients. When the amount of the emulsifier is in the above-described range, the addition effect is sufficiently obtained.

The upper limit of the amount of the emulsifier to be added is preferably 5% by mass or less and more preferably 2% by mass or less based on the total amount of the raw ingredient mixture. When the upper limit thereof is in the above-described range, the influence on the flavor of pet food is sufficiently suppressed.

### <Method of producing granular pet food>

The method of producing granular pet food according to the present embodiment includes a powder raw ingredient mixing step of mixing powder raw ingredients to obtain mixed powder; a liquid addition step of adding aqueous raw ingredients and oils and fats to the mixed powder; and a granulation step of granulating the raw ingredient mixture that contains the mixed powder, the aqueous raw ingredients, and the oils and fats after the liquid addition step.

### [Powder raw ingredient mixing step]

Raw ingredients used in a powder shape are ground as necessary and then mixed together to obtain mixed powder. Alternatively, a method of mixing the raw ingredients with each other while grinding the raw ingredients using a grinder or the like to obtain mixed powder may be used. The powder raw ingredient mixing step can be performed using a suitable known technique.

### [Liquid addition step]

In the liquid addition step, an emulsion containing aqueous raw ingredients, oils and fats, and an emulsifier is prepared (emulsion preparation step) and then the emulsion is added to mixed powder.

The emulsion preparation step includes a step of preparing an aqueous solution serving as aqueous raw ingredients as necessary. For example, propylene glycol obtained from the commercially available products is added to water such that an aqueous solution having a moderate concentration is prepared and the aqueous solution can be used as aqueous raw ingredients. As water used in the emulsion preparation step, as described above, water having a hardness of 120 mg/L or less is preferable.

In the emulsion preparation step, the order of mixing aqueous raw ingredients, oils and fats, and the emulsifier is not particularly limited. A method (a) of mixing the total amount of aqueous raw ingredients, oils and fats, and the emulsifier altogether to obtain an emulsion or a method (b) of mixing the total amount of the emulsifier with a part or the entire of oils and fats and then mixing the mixture with the aqueous raw ingredients may be used.

From the viewpoint of efficiently measuring the total amount of the emulsifier, the method (b) is preferable. Specifically, a method (b1) of mixing the total amount of the emulsifier with a part of oils and fats to obtain a pre-mixture and mixing the pre-mixture with aqueous raw ingredients and remaining oils and fats or a method (b2) of mixing the total amount of the emulsifier with oils and fats and then mixing the mixture with the aqueous raw ingredients is preferable. The method (b1) is particularly preferable from the viewpoint of easily and flexibly responding a change in formulation in emulsion.

In the method (b1), if the amount of oils and fats to be used when the total amount of the emulsifier is mixed with a part of oils and fats to prepare a pre-mixture is extremely small, the emulsifier is unlikely to be dispersed. When the amount thereof is extremely large, the pre-mixture needs to be frequently prepared (alternatively, a large amount of pre-mixture needs to be prepared). For example, the mass ratio of oils and fats to the emulsifier is preferably in a range of 29:1 to 4:1 and more preferably in a range of 19:1 to 9:1.

### [Granulation step]

A method of forming the raw ingredient mixture in a granular shape is not limited and a known method can be used. As the granulation method, a method of obtaining puffed pellets by performing a puffing process or a method of obtaining non-puffed pellets by extrusion granulation without performing a puffing process may be used.

The "puffing process" indicates a process of generating a gas in the inside of the raw ingredient mixture using a technique of carrying out heating, fermentation, a chemical reaction, or pressure reduction. In the puffing process, when a gas is generated, the volume of the raw ingredient mixture is increased so as to have porous properties. Further, when the volume of the raw ingredient mixture is increased, the bulk density thereof is decreased. Before, after, or at the same time with the puffing process, puffed pellets are obtained by forming the raw ingredient mixture in a granular shape.

From the viewpoint of easily obtaining excellent softness in the granular pet food, puffed pellets are more preferable than non-puffed pellets.

For example, a method of extruding and granulating puffed pellets using an extrusion granulator that includes a pre-conditioner and an extruder can be used.

As a method of producing puffed pellets using an extrusion granulator, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; p 157 to 190) can be used.

Specifically, in the pre-conditioner, the emulsion obtained by the emulsion preparation step is quantitatively supplied (liquid addition step) to the mixed powder obtained by the powder raw ingredient mixing step while the mixed powder is mixed, the mixture is conveyed while a heat treatment is performed, and then the obtained mixture is supplied to the extruder.

In the extruder, the mixture (raw ingredient mixture) mixed in the pre-conditioner is subjected to the heat treatment while being kneaded and then extruded and granulated in a granular shape at the outlet of the extruder.

The obtained pellets are cooled, thereby obtaining granulated pet food. Further, a heating and drying step is provided as necessary.

It is preferable that the conditions of the heat treatment in the pre-conditioner and the extruder are set such that the raw ingredients are not excessively heated and the effect of improving digestibility resulting from pregelatinization of starch is obtained.

According to the present embodiment, in the production of granular pet food formed by mixing and granulating the raw ingredients that contain powder raw ingredients, aqueous raw ingredients, and oils and fats, granular pet food in which unevenness in the composition of each pellet is decreased and uniformity of the composition is excellent is obtained by preparing a raw ingredient mixture using a method of preparing an emulsion that contains aqueous raw ingredients, oils and fats, and an emulsifier in advance using an emulsifier and adding the emulsifier to powder raw ingredients.

### [Examples]

The present invention will be described in detail with reference to the examples described below, but the present invention is not limited thereto. Hereinafter, "%" indicates "% by mass" unless otherwise noted.

### [Examples 1 to 6]

Granular pet foods with the compositions listed in Table 1 were produced.

Isomerized sugar containing 25% by mass of water was used as liquid sugar.

Sorbitan fatty acid ester (HLB value: 4.7) and reactive monoglycerides (containing 45% by mass or greater of glycerin fatty acid ester, HLB value: 3.2) were used as the emulsifiers contained in the emulsion.

Beef tallow was used as oils and fats. The beef tallow was used after being heated at 50°C in advance.

A propylene glycol aqueous solution formed by mixing 40% by mass of propylene glycol and 60% by mass of water (solvent) and a glycerin aqueous solution formed by mixing 85% by mass of glycerin and 15% by mass of water (solvent) were used as the humectants. In the table, the blending amount of water also includes water as a solvent.

Emulsions with the compositions of Table 2 were prepared (emulsion preparation step). Table 2 shows that the compositions of emulsifiers (based on the raw ingredient mixture) in Table 1 were converted into the compositions based on the emulsions, and the total amount thereof does not reach 100.00% by mass in some cases.

Before the emulsions were prepared, 60% by mass of water (hardness: 80 mg/L) was added to 40% by mass of propylene glycol and mixed together, thereby preparing a propylene glycol aqueous solution. As the glycerin aqueous solution, a commercially available product was used.

First, a part of oils and fats (beef tallow) and the total amount (0.45% by mass in the case of Example 1) of emulsifiers were mixed together to obtain a pre-mixture of oils and fats and emulsifiers. The mass ratio of oils and fats to the emulsifiers in the pre-mixture was 9:1. Next, the obtained pre-mixture, the total amount of aqueous raw ingredients, and the remaining oils and fats were stirred and mixed together, thereby obtaining emulsions.

Separately from the above-described step, the total amount of powder raw ingredients listed in Table 1 was ground using a grinder and mixed together (powder raw ingredient mixing step).

Next, the mixed powder obtained by the powder raw ingredient mixing step and the emulsions obtained by the emulsion preparation step were quantitatively supplied (liquid addition step) to the pre-conditioner of the extrusion granulator, and these were mixed together, subjected to a heat treatment at 100°C for 120 seconds, and then supplied to the extruder.

In the extruder, the mixture (raw ingredient mixture) mixed in the pre-conditioner was subjected to the heat treatment at 110°C for 30 seconds while being kneaded and then puffed at the same time of being extruded and granulated in a granular shape at the outlet of the extruder.

The obtained puffed pellets were cooled at room temperature (25°C), thereby obtaining granulated pet food.

Immediately after the extrusion and granulation, the moisture content and the water activity (Aw) of the granulated pet food cooled at room temperature for 12 hours were measured according to the above-described method.

**[Table 1]**

| | | | | Example 1 | Example 2 | Example 3 | Example 4 | Example 5 | Example 6 |
|---|---|---|---|---|---|---|---|---|---|
| Raw ingredient mixture | Composition of emulsion [% by mass] (based on raw material mixture) | Emulsifier | Sorbitan fatty acid ester | 0.10% | 0.08% | 0.10% | 0.10% | 0.10% | 0.10% |
| | | | Monoglyceride | - | 0.02% | - | - | - | - |
| | | Oils and fats | Beef tallow | 2.70% | 2.70% | 1.50% | 3.20% | 1.50% | 3.50% |
| | | Aqueous raw ingredients | Isomerized sugar | 4.75% | 4.75% | 4.75% | 15.00% | 15.00% | 3.50% |
| | | | Propylene glycol | 5.50% | 5.50% | 5.50% | 5.50% | 5.50% | - |
| | | | Glycerin | 0.85% | 0.85% | 0.85% | 0.85% | 0.85% | 9.35% |
| | | | Water (including solvent) | 8.40% | 8.40% | 8.40% | 8.40% | 8.40% | 1.65% |
| | | Subtotal | | 22.30% | 22.30% | 21.10% | 33.05% | 31.35% | 18.10% |
| | Composition other than | Powder raw | Cereals (corn and wheat flour) | 35.00% | 35.00% | 44.00% | 35.00% | 40.00% | 50.00% |
| | | | Chicken mill | 20.00% | 20.00% | 18.00% | 15.00% | 12.00% | 10.00% |
| | emulsion [% by mass] | ingredients | Defatted soybean mill | 10.00% | 10.00% | 5.00% | 5.00% | 5.00% | 10.00% |
| | | | Others (vitamins, minerals, and palatability enhancer) | 12.70% | 12.70% | 11.90% | 11.95% | 11.65% | 11.90% |
| | | Subtotal | | 77.70% | 77.70% | 78.90% | 66.95% | 68.65% | 81.90% |
| | Total amount | | | 100.00% | 100.00% | 100.00% | 100.00% | 100.00% | 100.00% |
| Granular pet food | | Moisture content (% by mass) | | 25.0% | 25.0% | 23.6% | 24.1% | 24.3% | 15.4% |
| | | Water activity (Aw) | | 0.80 | 0.80 | 0.79 | 0.73 | 0.75 | 0.63 |

**[Table 2]**

| | | | Example 1 | Example 2 | Example 3 | Example 4 | Example 5 | Example 6 |
|---|---|---|---|---|---|---|---|---|
| Composition of emulsion [% by mass] (based on emulsion) | Emulsifier | Sorbitan fatty acid ester | 0.45 | 0.36 | 0.47 | 0.30 | 0.32 | 0.55 |
| | | Monoglyceride | - | 0.09 | - | - | - | - |
| | Oils and fats | Beef tallow | 12.11 | 12.11 | 7.11 | 9.68 | 4.78 | 19.34 |
| | Aqueous raw ingredient s | Isomerized sugar | 21.30 | 21.30 | 22.51 | 45.39 | 47.85 | 19.34 |
| | | Propylene glycol | 24.66 | 24.66 | 26.07 | 16.64 | 17.54 | - |
| | | Glycerin | 3.81 | 3.81 | 4.03 | 2.57 | 2.71 | 51.66 |
| | | Water (including solvent) | 37.67 | 37.67 | 39.81 | 25.42 | 26.79 | 9.12 |
| | Total amount | | 100.00 | 100.00 | 100.00 | 100.00 | 99.99 | 100.01 |

### <Evaluation of uniformity>

In Examples 4 and 5, the obtained granular pet food was randomly sampled three times (samples 1 to 3) and the contents of lipid were measured using the following method. The results thereof are listed in Table 3.

The table shows the measurement values of the contents of lipid in the samples 1 to 3, the average values, differences between the maximum measurement values and the average values (MAX - average), and differences between the minimum measurement values and the average values (MIN - average).

### [Method of measuring content of lipid]

The lipid was measured using method in conformity with the acid decomposition diethyl ether extraction method described in Feed Analysis Criteria Commentary (second edition) published by Japan Scientific Feeds Association.

### [Comparative Example 1]

The uniformity of dry type granular pet food of the related art which was produced without using emulsifiers was evaluated using the above-described method. In this case, sampling was carried out twice. The results thereof are listed in Table 3.

The granular pet food of the present example was produced by preparing a raw ingredient mixture using a method of supplying mixed powder to a pre-conditioner of an extrusion granulator and supplying beef tallow (2.0% by mass based on the raw ingredient mixture) and added water (20% by mass based on the raw ingredient mixture) to the pre-conditioner, extruding and granulating this mixture with an extruder, and heating and drying the mixture such that the moisture content thereof became 9% by mass.

**[Table 3]**

| | | Sample 1 | Sample 2 | Sample 3 | Average value | MAX-average | MIN-average |
|---|---|---|---|---|---|---|---|
| Content of oils and fats [% by mass] | Example 4 (added beef tallow: 3.2%) | 10.2% | 9.9% | 9.9% | 10.0% | 0.2% | -0.1% |
| | Example 5 (added beef tallow: 1.5%) | 8.2% | 8.1% | 7.9% | 8.1% | 0.1% | -0.2% |
| | Comparative Example1 (added beef tallow: 2.0%) | 12.4% | 13.7% | - | 13.1% | 0.7% | -0.7% |

From the results of Table 3, in the granular pet foods obtained in Examples 4 and 5, unevenness in content of lipid in the samples 1 to 3 which were randomly sampled was extremely small and the uniformity of the granular pet foods was excellent.

Meanwhile, in Comparative Example 1, unevenness in content of lipid in the samples 1 and 2 was large and the uniformity of granular pet food was degraded.

Hereinbefore, preferred examples of the present invention have been described, but the present invention is not limited thereto. Addition, omission, substitution, and other modifications of configurations are possible within the range not departing from the scope of the present invention. Further, the present invention is not limited by the description above and only limited by the range of claims.

## Claims

1. A method for producing granular pet food comprising:
a powder raw ingredient mixing step of mixing powder raw ingredients to obtain mixed powder;
a liquid addition step of adding aqueous raw ingredients and oils and fats to the mixed powder; and
a granulation step of granulating the raw ingredient mixture that contains the mixed powder, the aqueous raw ingredients, and the oils and fats after the liquid addition step,
wherein the liquid addition step includes an emulsion preparation step of preparing an emulsion that contains the aqueous raw ingredients, the oils and fats, and an emulsifier in advance, and
the emulsion is added to the mixed powder.

2. The method of producing granular pet food according to claim 1,
wherein the emulsifier is mixed with a part or all of oils and fats and then mixed with the aqueous raw ingredients in the emulsion preparation step.

3. The method of producing granular pet food according to claim 2,
wherein an HLB value of the emulsifier in the emulsion is 8 or less.

4. The method of producing granular pet food according to any one of claims 1 to 3,
wherein the emulsion includes at least two kinds of emulsifiers having HLB values different from each other.

5. The method of producing granular pet food according to claim 4,
wherein the emulsifier in the emulsion includes monoglycerides.

6. The method of producing granular pet food according to any one of claims 1 to 5,
wherein the emulsion preparation step includes a step of adding water, and
the hardness of water is 120 mg/L or less.
